# EUROPEAN PATENT APPLICATION

(11) **EP 4 300 833 A1**
(43) Date of publication of application: **03.01.2024**
(21) Application number: 23729926.8
(22) Date of filing: 12.05.2023
(51) Int. Cl.: H04B 1/40, H03F 3/45, H03F 3/24, H03G 3/30, H04B 1/52, H03F 3/189, H04B 1/04

(54) **ELECTRONIC DEVICE AND METHOD FOR ADJUSTING GAIN ASSOCIATED WITH AMPLIFIER ON BASIS OF SIGNAL FROM DUPLEXER TO AMPLIFIER**

(30) Priority: 17.05.2022 KR 20220060501; 27.06.2022 KR 20220078542
(71) Applicant: Samsung Electronics Co., Ltd., Suwon-si, Gyeonggi-do 16677 (KR)
(72) Inventor: Go, Yonglim, Gyeonggi-do (KR); Yang, Dongil, Gyeonggi-do (KR); Na, Hyoseok, Gyeonggi-do (KR); Kim, Taeyoung, Gyeonggi-do (KR)
(74) Representative: Nederlandsch Octrooibureau
(86) International application number: PCT/KR2023/006517
(87) International publication number: WO 2023/224329

(57) **Abstract**

According to an embodiment, the electronic device adjusts a gain between a first signal path and a second signal path different from the first signal path, based on the comparator, while the first signal is transmitted to the amplifier through the first signal path. The electronic device obtains a first signal transmitted to the first signal path and a second signal generated based on the first signal and transmitted in the second signal path. The electronic device transmits a third signal for selecting a mode related to the gain as any one mode based on the first signal and the second signal, among a first designated mode for adjusting the gain within the designated range or a second designated mode for adjusting the gain to be less than the designated range.

## Description

### [Technical Field]

Various embodiments relate to an electronic device and a method for adjusting a gain associated with an amplifier based on a signal from a duplexer to the amplifier.

### [Background Art]

An electronic device may amplify a signal transmitted from a RFIC (radio frequency integrated circuit) through an amplifier to radiate the signal to the outside. The electronic device may include a duplexer that adjusts the path of a signal transmitted from the electronic device and a signal received from the outside.

### [Disclosure]

### [Technical Solution]

According to an embodiment, an electronic device may comprise a RFIC(radio frequency integrated circuit), an amplifier coupled to the RFIC via a first signal path, an antenna coupled to a second path different from the first signal path, a comparator coupled to the first signal path and the second signal path, and a controller for adjusting a gain between the first signal path and the second signal path based on the comparator, while a first signal is transmitted to the amplifier via the first signal path. The comparator may be configured to obtain the first signal transmitted to the first signal path, and a second signal generated based on the first signal and transmitted in the second signal path. The comparator may be configured to transmit, based on the first signal and the second signal, a third signal for selecting a mode, which is associated with the gain, among a first designated mode for adjusting the gain within a designated range, or a second designated mode for adjusting the gain to be less than the designated range.

According to an embodiment, a method of electronic device may comprise transmitting a first signal via a first signal path between a RFIC(radio frequency integrated circuit) and an amplifier by using the RFIC of the electronic device. The method of electronic device may comprise obtaining the first signal transmitted to the first signal path, and a second signal generated based on the first signal and transmitted in the second signal path based on a comparator coupled to the first signal path and the second signal path different from the first signal path, while the first signal is transmitted the RFIC to the amplifier. The method of electronic device may comprise transmitting, based on the first signal and the second signal, a third signal for selecting a mode, which is associated with a gain between the first signal path and the second signal path, among a first designated mode for adjusting the gain within a designated range, or a second designated mode for adjusting the gain to be less than the designated range.

According to an embodiment, an electronic device may comprise an RFIC(radio frequency integrated circuit), an amplifier for amplifying a first signal transmitted from the RFIC, a duplexer receiving a second signal amplified by the amplifier, an antenna transmitting wirelessly the third signal filtered by the duplexer, and a comparator for obtaining the first signal and the third signal. The comparator may be configured to identify whether the duplexer transmits at least a portion of the second signal towards the amplifier, based on the first signal and the third signal. The comparator may be configured to output a fourth signal for adjusting the at least a portion of the second signal transmitted from the duplexer to the amplifier based on identifying that the duplexer transmits the at least a portion of the second signal to the amplifier.

According to an embodiment, an electronic device may comprise a radio frequency integrated circuit (RFIC), an amplifier that amplifies a first signal transmitted from the RFIC, a duplexer that receives a second signal amplified by the amplifier, an antenna that wirelessly transmits a third signal filtered by the duplexer, and a comparator that obtains the first signal and the third signal.

According to an embodiment, a method of an electronic device may include transmitting a first signal from a radio frequency integrated circuit (RFIC) to an amplifier, and transmitting a second signal amplified by the amplifier to a duplexer. The method of the electronic device may include obtaining the first signal and the third signal filtered by the duplexer. The method of the electronic device may an operation of identifying whether the duplexer transmits at least a portion of the second signal towards the amplifier, based on the first signal and the third signal. The method of the electronic device may an operation of outputting a fourth signal for adjusting the at least a portion of the second signal transmitted from the duplexer to the amplifier based on identifying that the duplexer transmits the at least a portion of the second signal to the amplifier.

### [Description of the Drawings]

FIG. 1 is a block diagram of an electronic device in a network environment, according to an embodiment.
FIG. 2 illustrates a block diagram of an electronic device, according to an embodiment.
FIG. 3 illustrates at least a part of a radio frequency front end (RFFE) included in an electronic device, according to an embodiment.
FIG. 4 illustrates at least a partial circuit of an RFFE included in an electronic device, according to an embodiment.
FIG. 5 illustrates at least a partial circuit of an RFFE included in an electronic device, according to an embodiment.
FIGS. 6A to 6C illustrate graphs illustrating voltages of an electrical signal in an RFFE of an electronic device, according to an embodiment.
FIG. 7 illustrates a timing diagram for selecting a mode of an amplifier, according to an embodiment.
FIG. 8 illustrates at least a partial circuit of an RFFE included in an electronic device, according to an embodiment.
FIG. 9 illustrates at least a partial circuit of an RFFE included in an electronic device, according to an embodiment.
FIG. 10 is a flowchart illustrating an operation of an electronic device, according to an embodiment.
FIG. 11 is a flowchart illustrating an operation of an electronic device, according to an embodiment.
FIG. 12 is a flowchart illustrating an operation of an electronic device, according to an embodiment.

### [Mode for Invention]

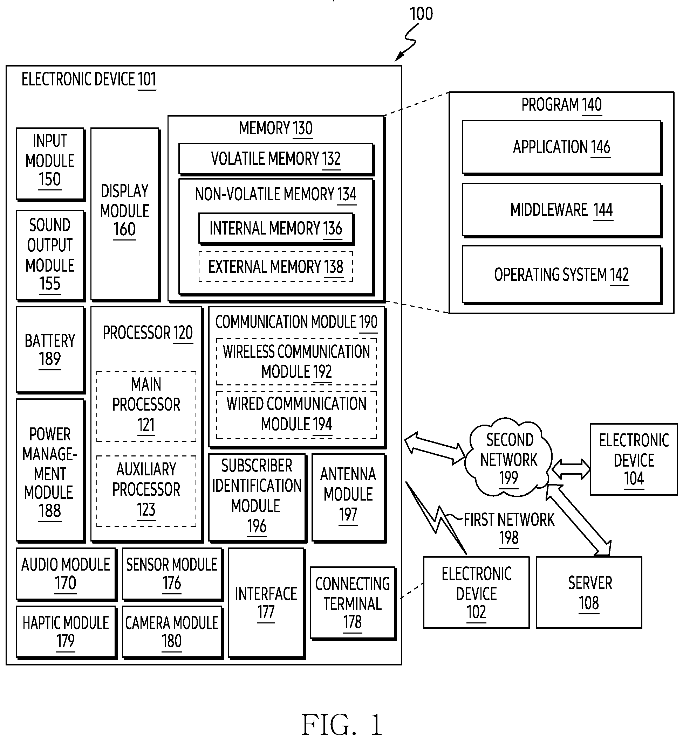

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of, the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150 or output the sound via the sound output module 155 or a headphone of an external electronic device (e.g., an electronic device 102) directly (e.g., wired) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wired) or wirelessly. According to an embodiment, the interface 177 may include, for example, a high-definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large-scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra-low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wired), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

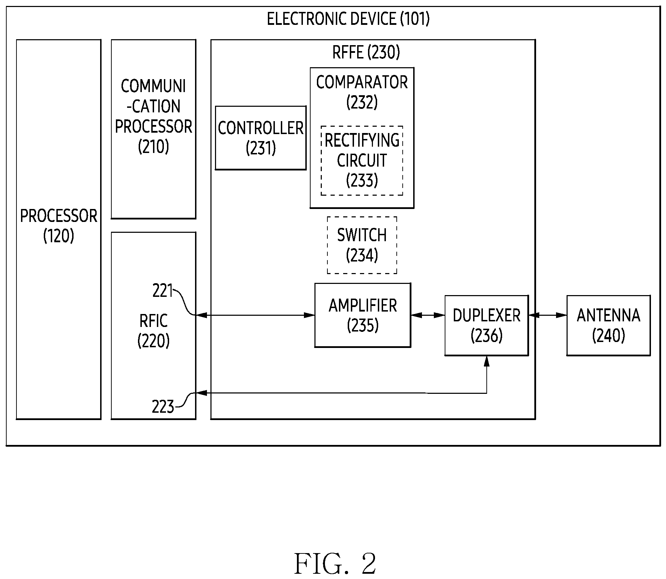

FIG. 2 illustrates a block diagram of an electronic device, according to an embodiment. The electronic device of FIG. 2 may include the electronic device 101 of FIG. 1

Referring to FIG. 2, according to an embodiment, the electronic device 101 may be electrically and/or operably coupled with each other by electronic components such as a processor 120, a communication processor 210, a radio frequency integrated circuit (RFIC) 220, and a radio frequency front end (RFFE) 230, a controller 231, a comparator 232, a rectifying circuit 233, a switch 234, an amplifier 235, a duplexer 236, and an antenna 240. Although illustrated based on different blocks, the embodiment is not limited thereto. For example, a part of the hardware components (e.g., at least a part of the processor 120, the communication processor 210, the RFIC 220, the RFFE 230, and/or the antenna 240) illustrated in FIG. 2 may be included in a single integrated circuit, such as a system on a chip (SoC). The type and/or number of hardware components included in the electronic device 101 are not limited to those illustrated in FIG. 2. For example, the electronic device 101 may include only some of the hardware components shown in FIG. 2. For example, the electronic device 101 may include only a part of the hardware components illustrated in FIG. 2.

According to an embodiment, the processor 120 of electronic device 101 may include a hardware component for processing data based on one or more instructions. Hardware components for processing data may include, for example, an arithmetical and logical unit (ALU), a floating-point unit (FPU), a field programmable gate array (FPGA), an application processor (AP), and/or a central processing unit (CPU). The number of processors 120 may be one or more. For example, the processor 120 may have a multi-core processor structure such as a dual core, a quad core, or a hexa core. For example, the processor 120 may have a single-core processor structure such as a single core. The processor 120 of FIG. 2 may include the processor 120 of FIG. 1.

According to an embodiment, the communication processor 210 may correspond to at least a part of the communication module 190 of FIG. 1. For example, the communication processor 210 may be used for various radio access technologies (RATs). For example, the communication processor 210 may be used to perform Bluetooth communication or wireless local area network (WLAN) communication. For example, the processor 120 may establish a connection with an external electronic device through the communication processor 210. For example, the processor 120 may establish a connection with a server through the communication processor 210. For example, the communication processor 210 may transmit a signal for notifying a signal transmitted from the RFIC 220 to the amplifier 235 to the controller 231. The controller 231 may transmit a signal for selecting a mode of the amplifier 235 based on the identification of the signal transmitted from the communication processor 210.

According to an embodiment, the RFIC 220 may transmit and/or receive a signal. For example, the RFIC 220 may transmit a signal generated by the communication processor 210. For example, the RFIC 220 may receive a signal transmitted from the outside through the antenna 240. For example, when transmitting a signal, the RFIC 220 may convert a baseband signal generated by the communication processor 210 into a radio frequency (RF) signal of about 700 MHz to about 3 GHz. When the RFIC 220 receives the signal, the RF signal may be obtained through the antenna 240 and preprocessed through the RFFE 230. The RFIC 220 may convert the preprocessed RF signal into a baseband signal so as to be processed by the communication processor 210. For example, the antenna 240 may correspond to at least a part of the antenna module 197 of FIG. 1.

According to an embodiment, when transmitting a signal, the RFIC 220 may convert a baseband signal generated by the communication processor 210 into an RF signal (hereinafter, referred to as a 5G Sub6 RF signal) of a Sub6 band (e.g., about 6GHz or less). When receiving a signal, the RFIC 220 may obtain a 5G Sub6 RF signal through an antenna (e.g., the antenna 240) and may be preprocessed through the RFFE 230. The RFIC 220 may convert the preprocessed 5G Sub6 RF signal into a baseband signal so as to be processed by the communication processor 210.

According to an embodiment, when transmitting a signal, the RFIC 220 may convert the baseband signal generated by the communication processor 210 into an RF signal (hereinafter, referred to as a 5G Above6 RF signal) of a 5G Above6 band (e.g., about 6GHz to about 60GHz). When the RFIC 220 receives the signal, the 5G Above6 RF signal may be obtained through the antenna 240 and preprocessed through the RFFE 230. The RFIC 220 may convert the preprocessed 5G Above6 RF signal into a baseband signal so as to be processed by the communication processor 210. For example, the RFIC 220 may include an amplifier, a transmitter, a receiver, and a synthesizer. However, it is not limited thereto.

According to an embodiment, the RFIC 220 may include a transmitting end 221 and a receiving end 223. For example, the RFIC 220 may transmit a signal for radiating to the outside to the amplifier 235 through the transmitting end 221. The RFIC 220 may receive a signal received through the antenna 240 from the outside through the receiving end 223.

According to an embodiment, the RFFE 230 may include a controller 231, a comparator 232, a rectifying circuit 233, a switch 234, an amplifier 235, and/or a duplexer 236. For example, the RFFE 230 may receive and convert a signal transmitted from an external electronic device through the antenna 240. For example, the RFFE 230 may convert a signal transmitted from the RFIC 220 and radiate the signal to the outside through the antenna 240.

According to an embodiment, the controller 231 may transmit a signal for setting the mode of the amplifier 235 based on the signal transmitted from the communication processor 210. The controller 231 may adjust a gain between the signal path through which the signal transmitted from the RFIC 220 is propagated and the signal path through which the signal transmitted from the amplifier 235 is propagated. According to an embodiment, the controller 231 may include a transceiver. When receiving a signal transmitted from at least one of the processor 120, the communication processor 210, or the RFIC 220, the transceiver may transmit a signal for adjusting the gain.

According to an embodiment, the comparator 232 may obtain a signal transmitted from the RFIC 220 to the amplifier 235. The comparator 232 may obtain a signal transmitted from the duplexer 236 to the antenna 240. The comparator 232 may transmit a signal for selecting a mode of the amplifier 235 to the amplifier 235, based on the signal transmitted from the RFIC 220 to the amplifier 235 and the signal transmitted from the duplexer 236 to the antenna 240.

According to an embodiment, the comparator 232 may include the rectifying circuit 233. The rectifying circuit 233 may rectify the signal transmitted from the RFIC 220 to the amplifier 235. The rectifying circuit 233 may rectify the signal transmitted from the duplexer 236 to the antenna 240. Although the rectifying circuit 233 is illustrated as a singular number but may be plural. The comparator 232 may transmit a signal for selecting a mode of the amplifier 235 based on the signal transmitted from the RFIC 220 rectified by the rectifying circuit 233 to the amplifier 235 and the signal transmitted from the duplexer 236 rectified by the rectifying circuit 233 to the antenna 240.

According to an embodiment, the comparator 232 may include an auto correlation circuit. The auto correlation circuit may compare the signal transmitted from the RFIC 220 and the signal transmitted from the duplexer 236 to the antenna 240. For example, the auto correlation circuit may transmit a signal for adjusting a gain between a signal path between the signal path through which the signal transmitted from the RFIC 220 is propagated and the signal path through which the signal transmitted from the amplifier 235 is propagated, based on the similarity between the signal transmitted from RFIC 220 and the signal transmitted from duplexer 236 toward antenna 240.

According to an embodiment, the switch 234 may be activated based on a signal transmitted from the controller 231 to connect signal paths. For example, when activated by the signal, the switch 234 may electrically connect a signal path between the RFIC 220 and the amplifier 235 and a signal path between the amplifier 235 and the duplexer 236, based on the signal transmitted from the controller 231. For example, the switch 234 may connect the signal paths based on a signal having a voltage matching the digital value 1 from controller 231. According to an embodiment, the switch 234 may electrically connect the signal path between the RFIC 220 and the amplifier 235, and the signal path between the amplifier 235 and the duplexer 236 based on the signal transmitted from the comparator 232.

According to an embodiment, the amplifier 235 may amplify a signal transmitted from the RFIC 220. For example, the amplifier 235 may amplify the signal transmitted from the RFIC 220, based on the signal transmitted from the controller 231, to transmit to the duplexer 236. For example, the amplifier 235 may adjust a gain between a signal transmitted from the RFIC 220 and a signal transmitted to the duplexer 236. The gain may mean a power ratio between a signal transmitted from the RFIC 220 to the amplifier 235 and a signal transmitted from the duplexer 236 to the antenna 240. As the gain increases, the amplifier 235 may further amplify the signal transmitted from the RFIC 220 to the amplifier 235. For example, the amplifier 235 may amplify and output a signal input to the amplifier 235 with a gain of 30 dB. For example, the amplifier 235 may select a mode of the amplifier 235 based on a signal transmitted from the processor 120, the communication processor 210, and/or the controller 231.

For example, the mode of amplifier 235 may include a mode related to a gain between a signal input to the amplifier 235 and a signal output from amplifier 235. For example, the mode of the amplifier 235 may be selected from a low power mode, a high-power mode, or a bypass mode. For example, the low power mode among the modes of the amplifier 235 may include a mode in which the gain between the input signal and the output signal has a gain between 15 dB and 20 dB. For example, the high-power mode among the modes of the amplifier 235 may be a mode different from the low power mode. For example, the high-power mode may include a mode in which a gain between the input signal and the output signal is 30 dB. For example, the bypass mode among the modes of the amplifier 235 may include a mode in which a signal transmitted from the RFIC 220 is transmitted to the duplexer 236 independently of the amplifier 235 by the switch 234.

According to an embodiment, the duplexer 236 may be electrically connected to the amplifier 235, the RFIC 220, and/or the antenna 240. The duplexer 236 may be connected to the amplifier 235 to receive a signal transmitted from the transmitting end 221 of the RFIC 220. The duplexer 236 may transmit a signal transmitted from the antenna 240 to the receiving end 223 of the RFIC 220. The duplexer 236 may transmit a signal transmitted from the transmitting end 221 of the RFIC 220 and amplified through the amplifier 235 to the antenna 240 for radiating the signal to the outside. For example, the duplexer 236 may filter a signal transmitted from the amplifier 235 to transmit the filtered signal to the antenna 240. For example, the duplexer 236 may transmit an AC signal transmitted from the amplifier to the antenna 240 through a signal path between the duplexer 236 and the antenna 240, based on identifying an AC signal transmitted from the amplifier 235 as an AC signal having a frequency within the designated range for radiating to the outside. For example, the duplexer 23 may receive the AC signal transmitted from the antenna 240, based on identifying the AC signal transmitted from the antenna 240 as an AC signal having a frequency within the designated range for transmitting the AC signal to the RFIC 220.

According to an embodiment, the amplifier 235 may receive an inband signal and/or an outband signal from the RFIC 220. When the amplifier 235 receives the outband signal, the duplexer 236 may reflect the outband signal transmitted from the amplifier 235 to the amplifier 235. For example, the inband signal may be a signal in which a frequency of a signal transmitted from the amplifier 235 is identified within a designated range. The outband signal may be a signal in which the frequency of the signal transmitted from the amplifier 235 exceeds the designated range. For example, the outband signal may be a signal transmitted from the RFIC 220 to the amplifier 235 due to an error in the phase-locked loop circuit in the RFIC 220. When the outband signal is identified, the duplexer 236 may transmit a signal having an amplitude of a signal smaller than an amplitude of the signal transmitted from the RFIC 220 to the antenna 240.

As described above, the electronic device 101 may prevent damage (or burnout) to the amplifier 235 by adjusting the gain between the signal path between the RFIC 220 and the amplifier 235 and the amplifier 235 and the duplexer 236 based on identifying the outband signal.

According to an embodiment, the antenna 240 may transmit a signal or power to the outside (e.g., an external electronic device) or receive the signal from the outside. According to an embodiment, the antenna 240 may include an antenna including a conductor formed on a substrate (e.g., a printed circuit board (PCB)) or a radiator formed of a conductive pattern. According to an embodiment, the antenna 240 may include a plurality of antennas (e.g., an array antenna). Signal or power may be transmitted or received between the communication processor 210 and an external electronic device through the antenna 240 or at least one of a plurality of antennas. The antenna 240 of FIG. 2 may include the antenna module 197 of FIG. 1.

As described above, the electronic device 101 may prevent damage (or burnout) to the amplifier 235 by selecting a mode of the amplifier 235 based on the signals transmitted to the comparator 232. For example, the duplexer 236 may transmit an outband signal transmitted from the amplifier 235 to the amplifier 235. The outband signal transmitted from the duplexer 236 to the amplifier 235 may cause damage (or burnout) of the amplifier 235. The probability that the amplifier 235 is damaged (or burned) may be proportional to an amplitude (or intensity) of the outband signal reflected to the amplifier 235. The comparator 232 may prevent damage (or burnout) of the amplifier 235 by transmitting a signal for selecting the mode of the amplifier 235 as the low-power mode based on identifying the outband signal transmitted from the duplexer 236 toward the amplifier 235.

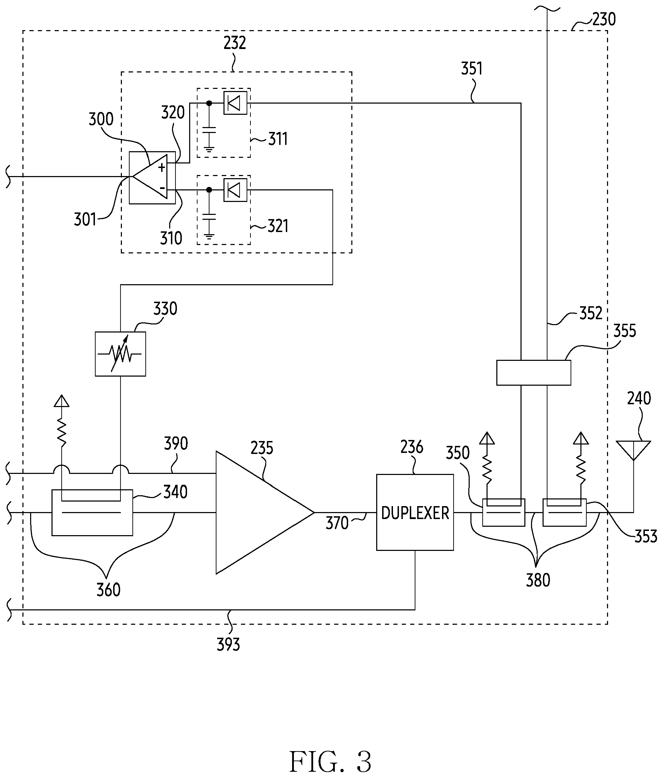

FIG. 3 illustrates at least a part of a radio frequency front end (RFFE) included in an electronic device, according to an embodiment. The electronic device of FIG. 3 may include the electronic device 101 of FIG. 1 to the electronic device 101 of FIG. 2. The RFFE 230 of FIG. 3 may include the RFFE 230 of FIG. 2.

Referring to FIG. 3, according to an embodiment, the comparator 232 may include a comparator 300 or a plurality of rectifiers 311 and 321. The comparator 232 may obtain a signal (e.g., a signal propagated within the signal path 360) transmitted from the RFIC (e.g., RFIC 220 in FIG. 2) and a signal (e.g., a signal propagated within the signal path 380) transmitted from the amplifier 235 to the antenna 240.

For example, the comparator 300 may be connected to the rectifier 321 through an inverted input 310 of the comparator 300. The rectifier 321 may be connected to the attenuator 330. The attenuator 330 may be connected to the coupler 340. The coupler 340 may be disposed on the signal path 360 for propagating a signal from the RFIC to the amplifier 235. The coupler 340 may obtain a signal of the signal path 360 based on an electric field and/or a magnetic field formed around the signal path 360 by a signal propagated within the signal path 360. An amplitude of the signal obtained by the coupler 340 may be smaller than an amplitude of the signal transmitted from the RFIC. The signal path 360 may mean a wired connection between the RFIC and the amplifier 235. The rectifier 311 may be connected through a non-inverted input 320 of the comparator 300. The rectifier 311 may be connected to the coupler 350. The coupler 350 may be disposed on the signal path 380 for propagating a signal from the duplexer 236 to the antenna 240. The coupler 350 may obtain a signal of the signal path 380 based on an electric field and/or a magnetic field formed around the signal path 380 by a signal propagated within the signal path 380. An amplitude of the signal obtained by the coupler 350 may be smaller than an amplitude of the signal transmitted from the amplifier 235. The signal path 380 may mean a wired connection between the duplexer 236 and the antenna 240. For example, the coupler 350 may obtain a signal transmitted from the duplexer 236 to the antenna 240. For example, the coupler 350 may transmit a signal of the signal path 380 to the rectifier 311 through the signal path 351.

For example, an amplitude of the signal coupled by the coupler 340 may be smaller than an amplitude of the signal transmitted from the RFIC to the amplifier. An amplitude of the signal coupled by the coupler 350 and/or an amplitude of the signal coupled by the coupler 353 may be smaller than an amplitude of the signal transmitted from the duplexer 236 to the antenna 240.

According to an embodiment, the electronic device may include a coupler 353 and/or a circuit 355. The coupler 353 may be disposed on the signal path 380 for propagating a signal from the antenna 240 to the duplexer 236. The coupler 353 may obtain a signal of the signal path 380 based on an electric field and/or a magnetic field formed around the signal path 380 by a signal propagated within the signal path 380. For example, the coupler 353 may obtain a signal transmitted from the antenna 240 to the duplexer 236. The amplitude of the signal obtained by the coupler 235 may be smaller than the amplitude of the signal transmitted from the antenna 240. For example, the signal obtained through the coupler 353 may be transmitted to an impedance matching circuit (not shown) through the signal path 352.

According to an embodiment, the circuit 355 may include a power divider. For example, the power divider may obtain a signal propagated from the duplexer 236 to the antenna 240 and transmit the signal to the comparator 232. The power divider may obtain a signal for radiation to the outside by the antenna 240 through the signal path 380 and transmit the signal to the comparator 232. For example, the power divider may obtain a signal for propagating from the antenna 240 through the signal path 380 to the signal path 393 through the duplexer 236. The power divider may obtain a signal for propagating to the signal path 393 and transmit the signal to an impedance matching circuit (not shown).

According to an embodiment, the circuit 355 may include a switch. The switch may be controlled by a controller (e.g., the controller 231 of FIG. 2), a processor (e.g., the processor 120 of FIG. 2), and/or a communication processor (e.g., the communication processor 210 of FIG. 2). For example, the switch may be controlled to transmit a signal obtained through the coupler 350 to the comparator 232 through the signal path 351. For example, the switch may be controlled to transmit the signal obtained through the coupler 353 to an impedance matching circuit (not shown) through the signal path 352.

According to an embodiment, the rectifier 321 may include a diode and/or a capacitor. For example, the diode may include a rectifier diode. The output end of the diode may be connected to the inverted input 310 of the comparator 300 and one end of the capacitor. The other end of the capacitor may be grounded. The capacitor may be used to indicate a signal output from the diode as a DC signal. The rectifier 311 may have a structure similar to that of the rectifier 321.

According to an embodiment, the rectifier 321 may receive an AC signal obtained through the coupler 340 and whose amplitude is adjusted by the actuator 330. The rectifier 321 may rectify the received AC signal to obtain a DC signal having a DC voltage. The DC voltage of the DC signal may be approximated by peak values of the voltage of the AC signal as the received AC signal is rectified. The peak value of the voltage waveform may indicate an amplitude of the received AC signal. The rectifier 321 may transmit a signal for indicating the DC voltage to the inverted input 310 of the comparator 300.

According to an embodiment, the rectifier 311 may perform substantially the same role as the rectifier 321. For example, the rectifier 311 may obtain an AC signal transmitted from the duplexer 236 to the antenna 240 by using the coupler 350. The rectifier 311 may rectify the AC signal obtained through the signal path 351 into a signal for indicating a DC voltage. The rectifier 311 may transmit a signal for indicating a DC voltage to the non-inverted input 320 of the comparator 300.

According to an embodiment, the comparator 232 may receive a signal (hereinafter, referred to as a first signal) obtained from the signal path 360 based on the coupler 340 and a signal (hereinafter, referred to as a second signal) obtained from the signal path 380 based on the coupler 350. For example, the first signal may include a signal transmitted from the RFIC to the amplifier 235. The first signal may be transmitted to the attenuator 330 through the coupler 340. In the first signal, an amplitude of the signal may be adjusted by the attenuator 330. The first signal may include a signal rectified by the rectifier 321. For example, the second signal may include a signal in which the amplitude of the first signal is amplified by the amplifier 235. The second signal may be a signal in which the amplified first signal is transmitted to the duplexer 236 through the signal path 370. The second signal may include a signal in which the signal amplified by the amplifier 235 is transmitted to the antenna 240 through the duplexer 236. For example, the second signal may be obtained by using the coupler 350 and transmitted to the rectifier 311 through the signal path 351. For example, the second signal may include a signal rectified by the rectifier 311. For example, the first signal may include a signal transmitted from the RFIC, coupled by the coupler 340, and rectified based on the rectifier 231. For example, the second signal may include a signal transmitted from the amplifier 235, coupled by the coupler 350, and rectified based on the rectifier 231.

According to an embodiment, the comparator 300 may transmit a signal output through the output end 301 based on the first signal rectified by the rectifier 321 and the second signal rectified by the rectifier 311. For example, the comparator 300 may transmit a signal for selecting a mode for adjusting a gain between the signal path 360 and the signal path 370 within the designated range, based on the first signal rectified by rectifier 321 being identified as less than the second signal rectified by rectifier 311. For example, a signal for selecting a mode for adjusting the gain between the signal path 360 and the signal path 370 within the designated range may be a signal for indicating a digital value 1. For example, the signal with the digital value 1 may be a signal for adjusting the gain between the signal path 360 and the signal path 370 to the designated range of the high-power mode.

For example, the comparator 300 may transmit a signal for selecting a mode for adjusting the gain between the signal path 360 and the signal path 370 to be less than the designated range based on the first signal being identified as more than the second signal. For example, a signal for selecting a mode for adjusting the gain between the signal path 360 and the signal path 370 to be less the designated range may be a signal for indicating a digital value of 0. For example, a mode for adjusting the gain between the signal path 360 and the signal path 370 to be less the designated range may include a low-power mode and/or a bypass mode.

According to an embodiment, based on the comparator 300, the comparator 232 may transmit a digital value indicating whether an intensity of the signal obtained from the signal path 380 is less than or equal to an intensity of the signal obtained from the signal path 360. An operation in which the intensity of a signal obtained from the signal path 380 is identified as less than or equal to the intensity of a signal obtained from the signal path 360 may mean that a signal transmitted from the RFIC is identified as the outband signal. Identifying the signal transmitted from the RFIC as the outband signal may include a case where the signal transmitted from the RFIC is reflected by the duplexer 236.

According to an embodiment, the comparator 232 may transmit a digital value indicating whether an intensity of the signal obtained from the signal path 380 exceeds the intensity of a signal obtained from the signal path 360, based on the comparator 300. A case in which the intensity of the signal obtained from the signal path 380 exceeds the intensity of the signal obtained from the signal path 360 may include a case in which the signal transmitted from the RFIC is the inband signal.

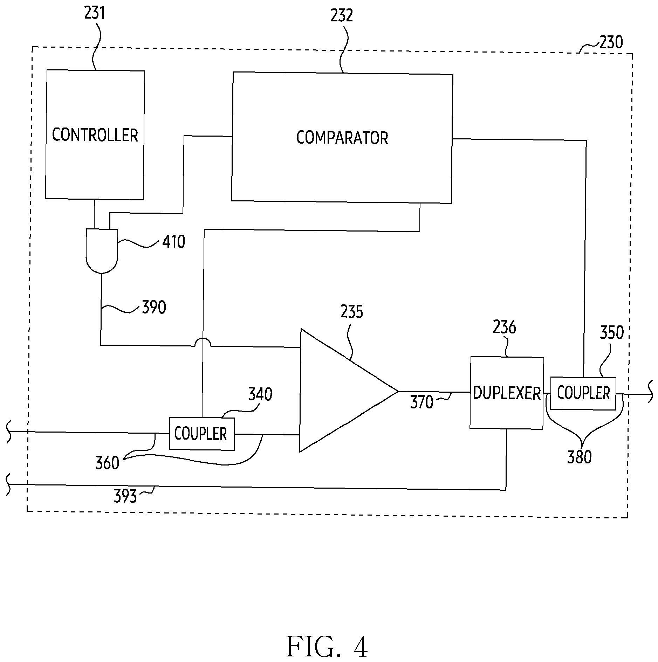

According to an embodiment, the amplifier 235 may receive a signal output from the comparator 300 through the signal path 390. The signal transmitted through the signal path 390 will be described later in FIGS. 4, 5, and 6.

As described above, in the electronic device 101, when the signal transmitted from the RFIC is reflected by the duplexer 236, damage (or burnout) of the amplifier 235 may occur. The electronic device 101 may prevent damage (or burnout) of the amplifier 235 by adjusting the gain between the signal path 360 and the signal path 370 based on the first signal rectified by the rectifier 321 and the second signal rectified by the rectifier 311.

FIG. 4 illustrates at least a partial circuit of an RFFE included in an electronic device, according to an embodiment. The electronic device of FIG. 4 may include the electronic device 101 of FIG. 1. The RFFE 230 of FIG. 4 may include the RFFE 230 of FIGS. 2 to 3.

Referring to FIG. 4, according to an embodiment, the RFFE 230 of the electronic device (e.g., the electronic device 101 in FIG. 1) may include a controller 231, a comparator 232, an amplifier 235, a duplexer 236, a coupler 340 and 350, and/or a gate 410. For example, the gate 410 may include an AND gate. The gate 410 may transmit a signal for adjusting a mode of the amplifier 235 based on an AND operation of the signal transmitted from the comparator 232 and the signal transmitted from the controller 231. For example, the controller 231 may transmit a signal for selecting a gain between the signal path 360 and the signal path 370 to the gate 410, based on a signal transmitted from at least one of the processor 120, the RFIC (e.g., the RFIC 220 of FIG. 2), or the communication processor 210. For example, the signal transmitted from the comparator 232 may include a digital signal output from the comparator included in the comparator 232 (e.g., the comparator 300 in FIG. 3). The gate 410 may transmit a signal for adjusting a mode of the amplifier 235 to the high-power mode to the amplifier 235 based on the signal transmitted from the comparator 232 and the signal transmitted from the controller 231 being signals for indicating a digital value of 1.

For example, based on difference between the signal transmitted from the comparator 232 and the signal transmitted from the controller 231, the gate 410 may transmit a signal for selecting a mode of the amplifier 235 related to the gain between the signal path 360 and the signal path 370 as one of the low-power mode and the bypass mode.

Table 1 is a truth table between digital values input to the gate 410 in the RFFE 230 of the electronic device according to an embodiment and digital values output from the gate 410.

**[Table 1]**

| Case | Signals input to gate 410 | | Signal output from gate 410 |
|---|---|---|---|
| | Signal received from controller | Signal received from comparator | |
| First case | 0 | 0 | 0 |
| Second case | 0 | 1 | 0 |
| Third case | 1 | 0 | 0 |
| Fourth case | 1 | 1 | 1 |

Referring to Table 1, the first to second cases may be cases where the electronic device 101 receives wireless signals from the outside by using the antenna 240. In the first to second cases, the communication processor (e.g., the communication processor 210 of FIG. 2) and/or the RFIC (e.g., the RFIC 220 of FIG. 2) may transmit a voltage (e.g., 0 voltage or a voltage less than the designated threshold) to the controller 231. The controller 231 may transmit digital value 0 to the gate 410 while receiving a voltage indicating digital value 0 from a communication processor (e.g., the communication processor 210 in FIG. 2) and/or RFIC (e.g., the RFIC 220 in FIG. 2). The comparator 232 may transmit a digital value based on a signal obtained from the signal path 360 and a signal obtained from the signal path 380. The comparator 232 may transmit the digital value indicating whether an intensity of the signal obtained from the signal path 380 is less than or equal to an intensity of the signal obtained from the signal path 360, based on the comparator 300 of FIG. 3. For example, the comparator 232 may transmit a digital value 0 to the gate 410 based on the signal obtained from the signal path 380 being identified less than or equal to the signal obtained from the signal path 360. The gate 410 may output a digital value 0 based on receiving a digital value 0 from the controller 231 and the comparator 232. For example, the comparator 232 may transmit a digital value 1 to the gate 410 based on that the signal obtained from the signal path 380 exceeds the signal obtained from the signal path 360. The gate 410 may output a digital value 0 through an AND operation based on the digital value 0 being received from the controller 231. The amplifier 235 may operate by selecting a mode of the amplifier 235 as one of the low-power mode or the bypass mode based on receiving the digital value 0 from the gate 410. The third to fourth cases may be cases in which the electronic device 101 radiates a wireless signal to the outside by using the antenna 240. In the third to fourth cases, the communication processor and/or the RFIC may transmit a voltage (e.g., 1.7 voltage, and/or a voltage above the designated threshold) indicating a digital value 1 to the controller 231. The controller 231 may transmit digital value 1 to the gate 410 while receiving a voltage indicating digital value 1 from the communication processor (e.g., the communication processor 210 in FIG. 2) and/or the RFIC (e.g., the RFIC 220 in FIG. 2).

In the third case, the comparator 232 may output a digital value 0 based on the signal obtained from the signal path 360 and the signal obtained from the signal path 380. For example, the comparator 232 may transmit a digital value 1 to the gate 410 based on the signal obtained via signal path 360 being identified as more that the signal obtained from signal path 380. The gate 410 may transmit the digital value 0 to the amplifier 235 based on the AND operation between the digital value 1 transmitted from the controller 231 and the digital value 0 transmitted from the comparator 232. The amplifier 235 may operate by selecting a mode of the amplifier 235 as one of the low power mode or the bypass mode based on receiving the digital value 0 from the gate 410. For example, in the third case, a case in which a signal transmitted from the RFIC is the outband signal may be included. For example, in a third case, the outband signal transmitted from the amplifier 235 may be reflected by the duplexer 236 to transmit to the amplifier 235 through the signal path 370.

In the fourth case, according to an embodiment, the comparator 232 may transmit the digital value 1 to the gate 410 based on the identification that the signal obtained from signal path 380 exceeds the signal obtained from signal path 360. For example, the comparator 232 may output a digital value 1 based on the transmission of an in-band signal from the RFIC. The gate 410 may output the digital value 1 based on the AND operation between the digital value 1 transmitted from the controller 231 and the digital value 1 transmitted from the comparator 232. The amplifier 235 may select and operate in the high-power mode based on receiving the digital value 1 from the gate 410.

As described above, in the electronic device 101 in the third case, the amplifier 235 may be damaged (or burnt out) based on the outband signal reflected by the duplexer 236. The electronic device 101 may prevent damage (or burnout) of the amplifier 235 by transmitting a signal for selecting a mode of the amplifier 235 through the comparator 232 to prevent damage (or burnout) of the amplifier 235, based on identifying the outband signal reflected by the duplexer 236.

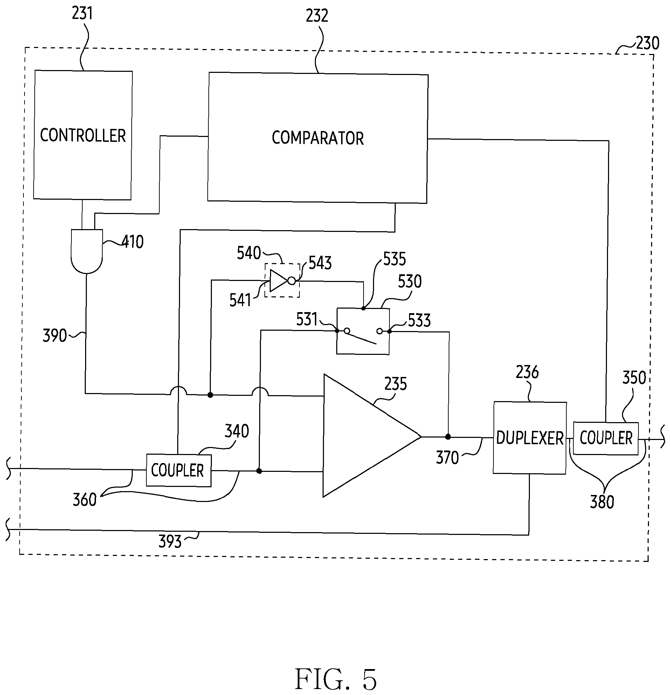

FIG. 5 illustrates at least a partial circuit of an RFFE included in an electronic device, according to an embodiment. The electronic device of FIG. 5 may include the electronic device 101 of FIGS. 1 to 4. The RFFE 230 of FIG. 5 may include the RFFE 230 of FIGS. 2 to 4.

Referring to FIG. 5, according to an embodiment, the amplifier 2935 may amplify the signal received through the signal path 360 and transmit the amplified signal through the signal path 370. One end 531 of the switch 530 may be connected to at least a part of the signal path 360. One end 533 of the switch 530 may be connected to at least a part of the signal path 370. The switch 530 may include one end 535 for receiving a signal transmitted from the inverter 540. The one end 535 of the switch 530 may be connected to the output end 543 of the inverter 540. The switch 530 may establish an electrical connection between the ends 531 and 533 based on a signal applied to the end 535 (e.g., a signal received from the inverter 540). For example, the switch 530 may be in an activated state in which an electrical connection between ends (531 and 533) is established while receiving a signal indicating a digital value 1 from the inverter 540. For example, the switch 530 may be in a deactivated state in which an electrical connection between ends (531 and 533) is released while receiving a signal indicating a digital value 0 from the inverter 540. For example, when in the activated state, the switch 530 may connect the signal path 360 and the signal path 370. For example, when the switch 530 is in the activated state, the signal transmitted from the RFIC (e.g., the RFIC 220 in FIG. 2) may be transmitted from the signal path 360 to the signal path 370 toward an antenna (e.g., the antenna 240 in FIG. 2) through the switch 530. For example, the activated state of the switch 530 may include the bypass mode. The bypass mode may include a case in which a signal transmitted from the RFIC does not pass through the amplifier 235. For example, the bypass mode may include a mode in which a signal transmitted from the RFIC is transmitted to the duplexer 236 independently of the amplifier 235 by the switch 530.

According to an embodiment, the RFFE 230 may include an inverter 540. For example, the inverter 540 may include an input end 541 connected to the output end of the gate 410. The inverter 540 may transmit a signal for adjusting the state of the switch 530 to the switch 530 based on the signal transmitted from the gate 410. For example, the inverter 540 may receive a signal for adjusting the switch 530 to the activated state from the gate 410.

According to an embodiment, the inverter 540 may transmit a signal for adjusting the state of the switch 530 based on the signal transmitted from the comparator 232. For example, the switch 530 may adjust the state of the switch 530 based on the signal transmitted from the comparator 232. The switch 530 may transmit a signal transmitted from the RFIC through the signal path 360 to the antenna through the signal path 370 independently of the amplifier 235 based on the reception of the signal for selecting a mode of the amplifier 235 transmitted from the comparator included in the comparator 232 (e.g., the comparator 300 in FIG. 3).

According to an embodiment, the inverter 540 may receive a signal for adjusting the switch 530 to a deactivated state from the gate 410. For example, the amplifier 235 may transmit a signal for amplifying transmitted from the RFIC and radiating the signal to the outside to an antenna, based on the signal transmitted from the gate 410.

Table 2 is a truth table between digital values (e.g., a signal received from the controller 251 and a signal received from the comparator 232) input to the gate 410 in the RFFE of the electronic device, digital values output from the gate 410, and digital values output from the inverter 540

**[Table 2]**

| Case | Signals input to gate 410 | | Signal output from gate 410 | Signal output from inverter 540 |
|---|---|---|---|---|
| | Signal received from controller | Signal received from comparator | | |
| First case | 0 | 0 | 0 | 1 |
| Second case | 0 | 1 | 0 | 1 |
| Third case | 1 | 0 | 0 | 1 |
| Fourth case | 1 | 1 | 1 | 0 |

The first to fourth cases of Table 2 may correspond to each of the first to fourth cases of Table 1. For example, referring to Table 2, in the first to third cases, the inverter 540 may control the switch 530 by outputting the digital value 1 based on receiving the digital value 0 from the gate 410. For example, a case in which the inverter 540 receives the digital value 0 from the gate 410 may include a case in which the outband signal is transmitted from the RFIC. For example, the third case may include a case in which the outband signal is transmitted from the RFIC and the outband signal is transmitted from the duplexer 236 to the amplifier 235.
For example, in the first to third cases of Table 2, the switch 530 may be adjusted to the activated state based on receiving the digital value 1 and may change a mode of the amplifier 235 to the bypass mode. The reception of the digital value 1 by the switch 530 may include a case in which the inband signal is transmitted from the RFIC. For example, in the fourth case of Table 2, the inverter 540 may output a digital value 0 based on receiving a digital value 1 from the gate 410. The switch 530 may be adjusted to the inactivated state based on receiving the digital value 0 from the inverter 540. The amplifier 235 may select and operate the high-power mode based on the inactivated state of the switch 530. For example, in the fourth case of Table 2, the RFIC may include a case of transmitting the inband signal to the amplifier 235.

As described above, the electronic device may prevent damage (or damage) to the amplifier 235 by controlling the state of the switch 530 based on the identification of the out-band signal.

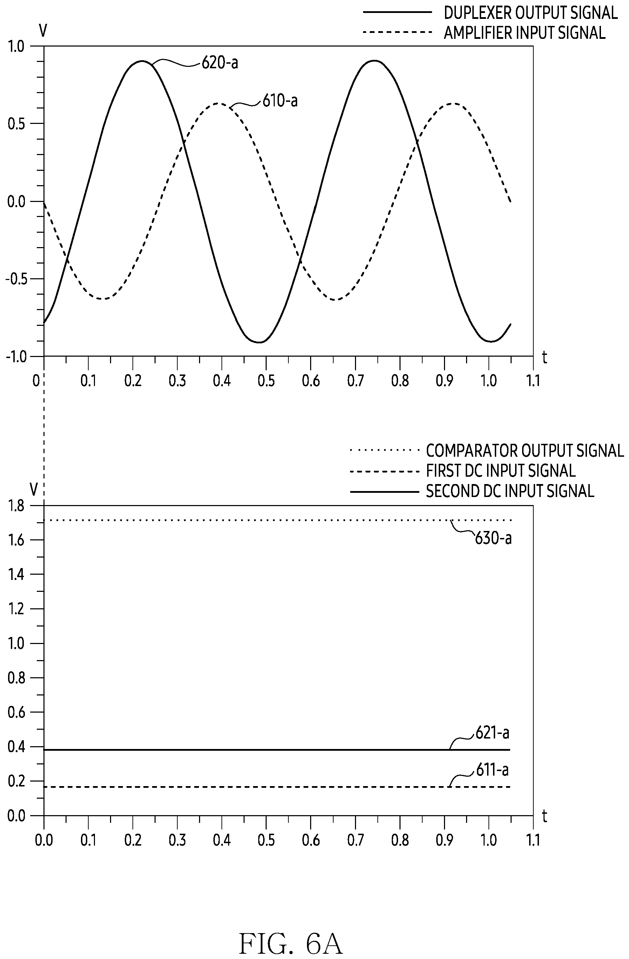

FIGS. 6A to 6C illustrate graphs illustrating voltages of an electrical signal in an RFFE of an electronic device, according to an embodiment.

The electronic device of FIGS. 6A to 6C may include the electronic device 101 of FIGS. 1 to 2. The RFFE of FIGS. 6A to 6C may include the RFFE 230 of FIGS. 2 to 5.

FIG. 6A may be a case in which an inband signal is transmitted from an RFIC (e.g., the RFIC 220 of FIG. 2). Referring to FIG. 6A, according to an embodiment, a comparator (e.g., the comparator 232 of FIGS. 2 to 4) of the electronic device may obtain an amplifier input signal 610-a and a duplexer output signal 620-a. For example, the comparator may obtain the amplifier input signal 610-a transmitted to a first signal path (e.g., the signal path 360 of FIG. 3) through a first coupler (e.g., the coupler 340 of FIG. 3). The comparator may obtain the signal 610-a obtained through the first coupler and adjusted by an attenuator (e.g., the attenuator 330 in FIG. 3). For example, the comparator may obtain a duplexer output signal 620-a transmitted to a second signal path (e.g., the signal path 380 of FIG. 5) through a second coupler (e.g., the coupler 350 of FIG. 3). For example, the duplexer output signal 620-a may include a signal filtered by the duplexer. The comparator may obtain the signal 620-a to be transmitted from the amplifier (e.g., the amplifier 235 of FIGS. 2 to 5) to the antenna (e.g., the antenna 240 in FIGS. 2 to 4) through the duplexer (e.g., the duplexer 236 in FIGS. 2 to 3) and radiated to the outside, through the second coupler. The comparator may transmit a comparator output signal 630-a based on the amplifier input signal 610-a and the duplexer output signal 620-a.

According to an embodiment, the comparator may obtain a first DC input signal 611-a from the amplifier input signal 610-a by using a first rectifier (e.g., the rectifier 321 of FIG. 3). The comparator may obtain a second DC input signal 621-a from the duplexer output signal 620-a by using a second rectifier (e.g., the rectifier 311 of FIG. 3). The comparator may obtain a comparator output signal 630-a based on the first DC input signal 611-a and the second DC input signal 621-a and transmit it to a gate (e.g., the gate 410 of FIG. 4). A comparator (e.g., the comparator 300 of FIG. 3) may transmit a signal for selecting a mode of the amplifier based on the signal 611-a and the signal 621-a converted by rectifiers. For example, when the amplitude of the first DC input signal 611-a is identified to exceed the amplitude of the second DC input signal 621-a, the comparator may transmit a signal to the gate for selecting a mode of the amplifier as the high-power mode. The gate may transmit a signal for selecting a mode of the amplifier as the high-power mode based on receiving the comparator output signal 630 and the signal transmitted from the controller. For example, FIG. 6A may include a case in which a signal transmitted from the RFIC is the inband signal. For example, FIG. 6A may be referred to as the fourth case of Table 1. For example, FIG. 6A may be referred to as the fourth case of Table 2.

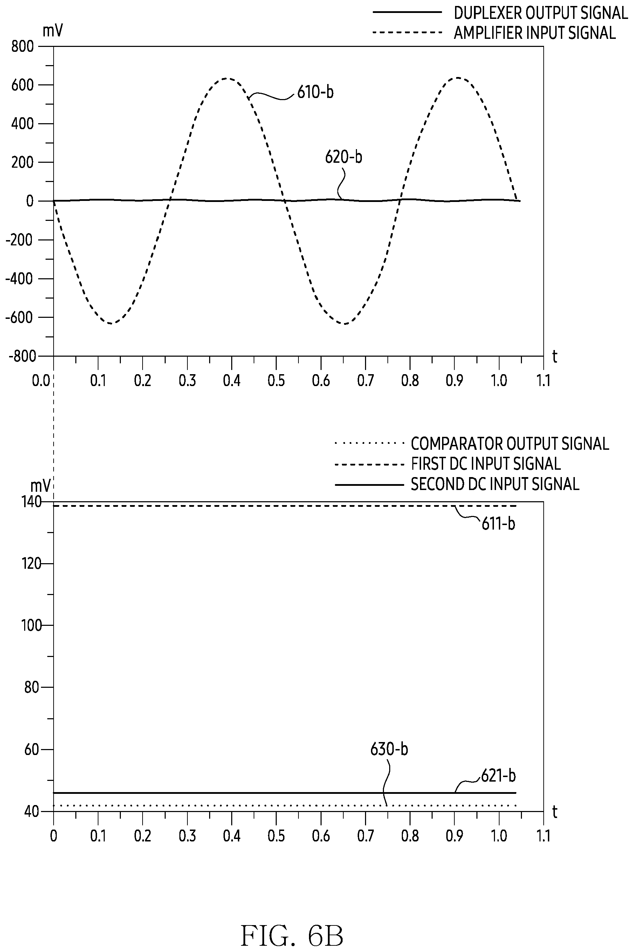

FIG. 6B may be a case in which an outband signal is transmitted from the RFIC. Referring to FIG. 6B, according to an embodiment, the comparator may obtain the amplifier input signal 610-b and the duplexer output signal 620-b. The comparator may transmit a signal for adjusting a mode of the amplifier to the amplifier based on the obtained signals. The comparator may obtain a first DC input signal 611-b and a second DC input signal 621-b through rectifiers included in the comparator. The first DC input signal 611-b may be obtained by using a first rectifier based on the amplifier input signal 610-b. The second DC input signal 621-b may be obtained by using a second rectifier based on the duplexer output signal 620-b. For example, the comparator may transmit a comparator output signal 630-b to the gate based on the second DC input signal 621-b being identified as less than the first DC input signal 611-b. The gate may transmit a signal for selecting a mode of the amplifier as the low-power mode based on the comparator output signal 630-b and the signal transmitted from the controller. For example, the comparator may transmit a signal for selecting a mode of the amplifier as one of the low-power mode or the bypass mode, based on outputting the comparator output signal 630-b. For example, FIG. 6B may be referred to as the third case of Table 1. For example, FIG. 6B may be referred to as the third case of Table 2.

As described above, a state in which the duplexer output signal 620-b is identified as less than the amplifier input signal 610-b may include a state in which the duplexer output signal 620-b is transmitted from the duplexer to the amplifier. For example, while the RFIC transmits the outband signal, the duplexer may transmit the duplexer output signal 620-b to the amplifier. For example, when the duplexer output signal 620-b is propagated from the duplexer to the amplifier, the duplexer output signal 620-b may cause damage (or burnout) to the amplifier. The comparator may prevent damage (or burnout) to the amplifier by adjusting the mode of the amplifier by transmitting a signal for selecting one of the low power mode of the amplifier or the bypass mode of the amplifier, based on that the duplexer output signal 620-b is identified to be less than the amplifier input signal 610-b during the transmission of the outband signal by the RFIC.

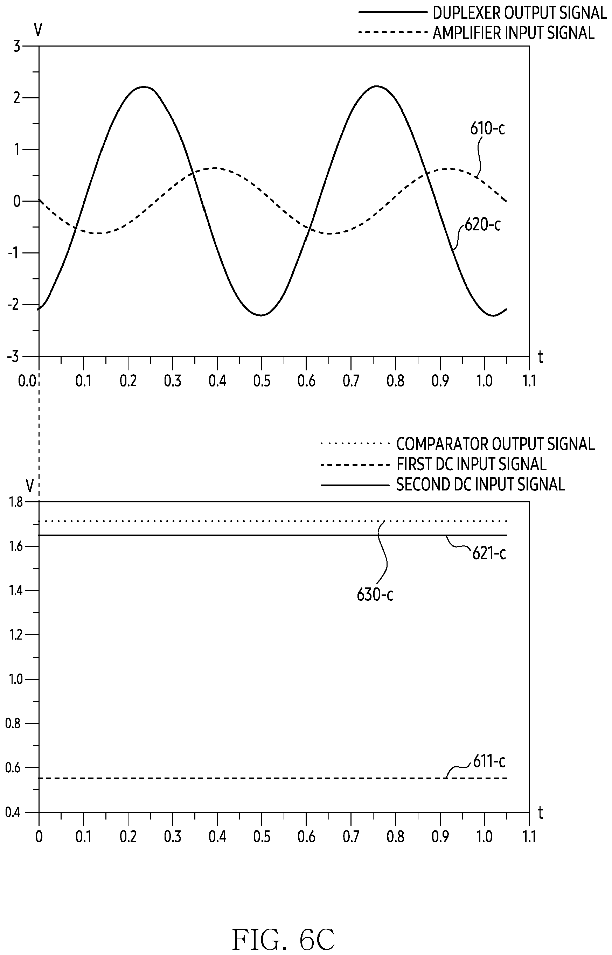

FIG. 6C may be a case in which an inband signal is transmitted from the RFIC and the amplifier operates in the high-power mode. Referring to FIG. 6C, according to an embodiment, the comparator may obtain an amplifier input signal 610-c transmitted through a first signal path (e.g., the signal path 360 of FIG. 5) using a first coupler (e.g., the coupler 340 of FIG. 3). The comparator may obtain a duplexer output signal 620-c transmitted through a second signal path (e.g., the signal path 380 of FIG. 5) using a second coupler (e.g., the coupler 350 of FIG. 3). The duplexer output signal 620-c may include a signal 620-c in which a signal transmitted from the RFIC is amplified by the amplifier. The comparator may rectify the obtained signals 610-c and 620-c through rectifiers included in the comparator (e.g., the rectifier 311 of FIG. 3 and the rectifier 321 of FIG. 3). The comparator may transmit a signal for selecting a mode of the amplifier based on the signals 611-c and 621-c rectified by the rectifiers. For example, the RFIC may transmit an alternating current signal toward the amplifier. For example, the RFIC may transmit an AC signal to the amplifier. The comparator may transmit a signal for selecting a mode of the amplifier based on the first DC input signal 611-c obtained by rectifying the AC signal transmitted from the RFIC. The comparator may transmit a signal for selecting a mode of the amplifier based on the second DC input signal 621-c obtained by rectifying the AC signal transmitted from the amplifier to the antenna. The comparator may transmit a signal for changing a mode of the amplifier by transmitting the comparator output signal 630-c by using the first DC input signal 611-c and the second DC input signal 621-c. For example, the comparator may transmit a signal for adjusting the amplifier to the high-power mode based on that the amplitude of the first DC input signal 611-c is identified as less than the amplitude of the second DC input signal 621-c. FIG. 6C may be referred to as the fourth case of Table 1. FIG. 6C may be referred to as the fourth case of Table 2.

As described above, referring to FIG. 6B, the comparator may prevent damage (or burnout) to the amplifier by transmitting a signal for selecting one of the low-power mode or the bypass mode of the amplifier, based on the signal (e.g., the amplifier input signal 610-b in FIG. 6B) transmitted from the amplifier being identified as less than the signal (e.g., the duplexer output signal 620-b in FIG. 6B) transmitted from the RFIC to the amplifier.

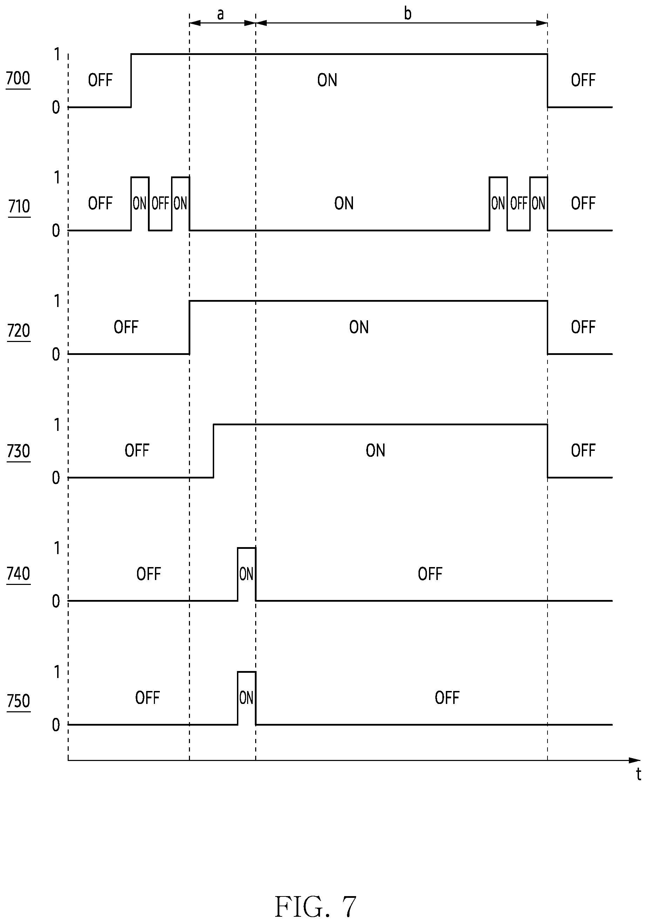

FIG. 7 illustrates a timing diagram for selecting a mode of an amplifier, according to an embodiment. The electronic device of FIG. 7 may include the electronic device 101 of FIGS. 1 to 2. The RFFE of FIG. 7 may include the RFFE 230 of FIGS. 2 to 5.

Referring to FIG. 7, according to an embodiment, a power signal 700 may include a DC voltage signal applied to a controller (e.g., the controller 231 of FIG. 2). A signal 710 transmitted from a processor (e.g., the processor 120 in FIG. 2) to the controller may be input to transmit a signal 720 for the controller to select a mode of the amplifier (e.g., the amplifier 235 in FIG. 2) to a gate (e.g., the gate 410 in FIG. 4). A signal 730 transmitted from the RFIC (e.g., the RFIC 220 of FIG. 2) may include the second DC input signals 621-a, 621-b, and 621-c of FIGS. 6A to 6C. A signal 750 transmitted from the gate may be obtained based on the signal 720 for selecting a mode of the amplifier and a signal 740 output from the comparator (e.g., the comparator 300 in FIG. 3). For example, the signal 750 transmitted from the gate may be referred to a signal output from the gate 410 in Table 1 and a signal output from the gate 410 in Table 2. For example, the signal 740 output from the comparator may be referred to as a signal received from the comparator in Table 1 (e.g., the comparator 232 in FIG. 2) and/or a signal received from the comparator in Table 2. For example, the signal 740 output from the comparator may be referred to as a comparator output signals 630-a, 630-b, and 630-c of FIGS. 6A to 6C.

According to an embodiment, the amplifier may operate by selecting a low-power mode, which is a mode for adjusting the gain between the signal path between the RFIC and the amplifier, and between the signal path between the amplifier and the duplexer (e.g., the duplexer 236 in FIG. 2) to be less than the designated range, during a time interval a. The amplifier may be operated by selecting a bypass mode during the time interval a. For example, the comparator may transmit the signal 740 output from the comparator based on the identification of the signal 730 transmitted from the RFIC during the time interval a. For example, the comparator may transmit the signal 740 output from the comparator based on the signal 730 transmitted from the RFIC being identified as the inband signal. According to an embodiment, during the time interval a, the signal 750 transmitted from the gate may transmit a signal indicating a digital value 1, in response to the signal 720 for selecting the mode of the amplifier and the signal 740 output from the comparator indicating the digital value 1. The amplifier may be selected and operated in the high-power mode during a time period b based on the signal 750 transmitted from the gate indicating a digital value 1.

As described above, the electronic device may select a mode of the amplifier as the high-power mode by transmitting the signal 740 output from the comparator, based on that the signal 730 transmitted from the RFIC is identified as the inband signal. The amplifier may be operated by selecting any one of the low-power mode and the bypass mode while the signal 740 output from the comparator is outputting a signal indicating a digital value of 0. The electronic device may prevent damage (or burnout) to the amplifier by selecting a mode of the amplifier based on the signal 740 output from the comparator.

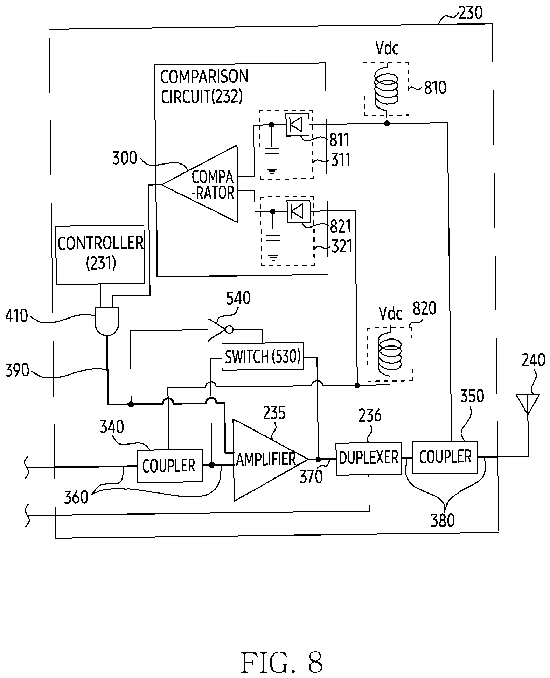

FIG. 8 illustrates at least a partial circuit of an RFFE included in an electronic device, according to an embodiment. The electronic device of FIG. 8 may include the electronic device 101 of FIGS. 1 to 7. The RFFE 230 of FIG. 8 may include the RFFE 230 of FIGS. 2 to 5.

Referring to FIG. 8, according to an embodiment, the RFFE 230 may further include an inductor 810 and/or an inductor 820. For example, the inductor 810 may include one end receiving a DC voltage and the other end connected to a path between the rectifier 311 and the coupler 350. For example, the inductor 820 may include one end receiving a DC voltage and the other end connected to a path between the rectifier 321 and the coupler 340.

According to an embodiment, the comparator 232 may obtain a signal transmitted from the RFIC (e.g., the RFIC 220 in FIG. 2) through the coupler 340. The comparator 232 may receive a signal transmitted from the RFIC as an AC signal. The rectifier 321 included in the comparator 232 may require a signal greater than or equal to the designated amplitude to rectify the signal received from the coupler 340. The signal greater than or equal to the designated amplitude rectifying the signal received from the coupler 340 may include a threshold voltage of the diode 821 included in the rectifier 321. The inductor 820 may adjust an amplitude of the AC signal obtained through the coupler 340 to an amplitude equal to or greater than the threshold voltage of the diode 821, by transmitting a DC voltage signal. The rectifier 321 may rectify the adjusted signal and transmit the rectified signal (hereinafter, referred to as a first signal) to the comparator 300.

According to an embodiment, the comparator 232 may obtain an AC signal amplified by the amplifier 235 and filtered by the duplexer 236 through the coupler 350 in the signal path 380. The rectifier 311 may require a signal that is greater than or equal to the designated magnitude for rectifying the signal received from the coupler 350. The signal above the designated amplitude for rectifying the signal received from the coupler 350 may include a threshold voltage of the diode 811. The inductor 810 may adjust an amplitude of the AC signal obtained through the coupler 350 to an amplitude equal to or greater than the threshold voltage of the diode 811, by transmitting a DC voltage signal. The rectifier 311 may rectify the adjusted signal and transmit the rectified signal (hereinafter, referred to as a second signal) to the comparator 300. According to an embodiment, the comparator 232 may transmit a signal for adjusting a gain between the signal path 360 and the signal path 370 to the gate 410, based on receiving the inductor 810, the first signal adjusted by the inductor 820, and/or the second signal adjusted by the inductor 820. The signal for adjusting a gain between the signal path 360 and the signal path 370 may include a signal for selecting a mode of the amplifier 235.

According to an embodiment, the comparator 232 may transmit a signal for adjusting a gain between the signal path 360 and the signal path 370 based on the third signal (e.g., the signal output from the comparator 740 of FIG. 7) obtained through the first signal and the second signal. For example, based on the second signal being identified as less than or equal to the first signal, the comparator 232 may transmit a signal for selecting one of the low-power mode and the bypass mode as the mode of the amplifier 235 to the gate 410. The gate 410 may transmit a signal for selecting one of a low-power mode and a bypass mode to the amplifier 235, based on receiving a signal from the controller and a signal for selecting one of the low-power or the bypass mode.

According to an embodiment, the duplexer 236 may cause damage (or burnout) to the amplifier 235 based on identifying the outband signal. When the outband signal is identified and the signal is transmitted to the amplifier 235, the duplexer 236 may transmit a signal having an amplitude smaller than the amplitude of the signal transmitted from the RFIC to the signal path 380. The comparator 232 may transmit a signal for selecting a mode of the amplifier 235 from the low-power mode or the bypass mode based on receiving the signal through the coupler 350. The comparator 232 may prevent damage (or burnout) to the amplifier 235 by transmitting a signal for selecting any one of the low-power mode and the bypass mode. The bypass mode may include transmitting a signal from the signal path 360 to the signal path 370 through the switch 530.

As described above, the electronic device may remove the noise of the signal obtained through the signal path 360 and/or the signal obtained through the signal path 380 by including the inductor 810, and/or the inductor 820.

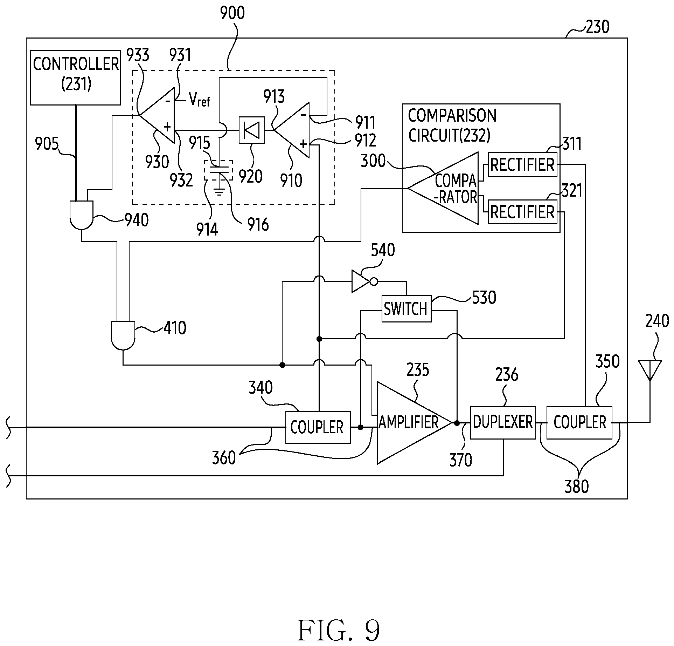

FIG. 9 illustrates at least a partial circuit of an RFFE included in an electronic device, according to an embodiment. The electronic device of FIG. 9 may include the electronic device of FIGS. 1 to 8. The RFFE 230 of FIG. 9 may include the RFFE 230 of FIGS. 2 to 5 and/or 8.

Referring to FIG. 9, the electronic device may include a peak detection comparison circuit 900. The peak detection comparison circuit 900 may include a comparator 910, a capacitor 914, a diode 920, and/or a comparator 930. The comparator 910 may be connected to the coupler 340. The non-inverted input 912 of the comparator 910 may be connected to the coupler 340. The inverted input 911 of the comparator 910 may be connected to one end 915 of the capacitor 914. The other end 916 of the capacitor 914 may be grounded. The output end 913 of the comparator 910 may be connected to the diode 920. The diode 920 may be connected to the non-inverted input 932 of the comparator 930. The inverted input 931 of the comparator 930 may be input with a designated voltage. The designated voltage input to the inverted input 931 of the comparator 930 may be a voltage for operating the comparator 232 when the peak of the signal transmitted through the signal path 360 is identified as the designated voltage or more. The output end 933 of the comparator 930 may be connected to the gate 940.

According to an embodiment, Table 3 is a truth table between digital values (e.g., signals received from the controller 231, signals received from the peak detection comparison circuit 900) input to the gate 940 in the RFFE 230 of the electronic device and digital values output from the gate 940.

**[Table 3]**

| Case | Signals input to gate 940 | | Signal output from gate 940 |
|---|---|---|---|
| | Signal received from controller | Signal received from peak detection comparison circuit | |
| (a) case | 0 | 0 | 0 |
| (b) case | 1 | 0 | 0 |
| (c) case | 0 | 1 | 0 |
| (d) case | 1 | 1 | 1 |

Referring to Table 3, case (a) to case (b) may be cases in which a signal obtained through the coupler 340 is identified to be less than a designated voltage (e.g., Vref). For example, the peak detection comparison circuit 900 may obtain an AC signal of the signal path 360 through the coupler 340. The peak detection comparison circuit 900 may transmit a digital value 0 to the gate 940 based on the peak voltage of the AC signal being identified less than the designated voltage input to the non-inverted input 931 of the comparator 930. The gate 940 may output a digital value 0 and transmit the digital value to the gate 410 based on the digital value 0 transmitted from the peak detection comparison circuit 900. The amplifier 235 may select and operate a low-power mode, based on receiving the digital value 0 transmitted from the gate 410 while the controller 231 transmits a signal for selecting the low-power mode of the amplifier 235 through the signal path 905. For example, in the case (a) of Table 3, the electronic device may control the RFFE 230 based on the first case and the second case of Table 1 and/or Table 2. For example, in the case (b) of Table 3, the electronic device may control the RFFE 230 based on the third case and the fourth case of Table 1 and/or Table 2.

For example, the case (c) to the case (d) of Table 3 may be a case in which a signal obtained through the coupler 340 is identified as a designated voltage or higher. For example, the peak detection comparison circuit 900 may transmit the digital value 1 to the gate 940, based on the fact that the peak voltage of the AC signal obtained through the coupler 340 is identified above the designated voltage input to the non-inverting input 931 of the comparator 930. In the case (c) of Table 3, the gate 940 may output a digital value 0 and transmit the digital value to the gate 410, based on the digital value 1 transmitted from the peak detection comparison circuit 900 and the digital value 0 transmitted from the controller 231. The gate 410 may transmit a signal for setting a mode of the amplifier 235 to the low-power mode based on the digital value 0 transmitted from the gate 940. For example, in the case (c) of Table 3, the electronic device may control the RFFE 230 based on the first case and the second case of Table 1 and/or Table 2.
For example, in the case (d) of Table 3, the controller 231 may transmit a digital value 1 to the gate 940. The gate 940 may output a digital value 1 and transmit the digital value to the gate 410, based on the digital value 1 transmitted from the controller 231 and the digital value 1 transmitted from the peak detection comparison circuit 900. The digital value 1 may be transmitted from the gate 410, while transmitting a signal for selecting the low-power mode from the controller 231 through the signal path 905, and the amplifier 235 receiving the digital value 1 from the comparator 232 may select and operate a high-power mode. For example, in the case (d) of Table 3, the electronic device may control the RFFE 230 based on the third case and the fourth case of Table 1 and/or Table 2.

As described above, the electronic device may prevent damage (or burnout) to the amplifier 235 by identifying a signal greater than or equal to the designated voltage magnitude while the signal is reflected by the duplexer 236 and selecting a mode of the amplifier 235 based on the signal transmitted from the comparator 232.

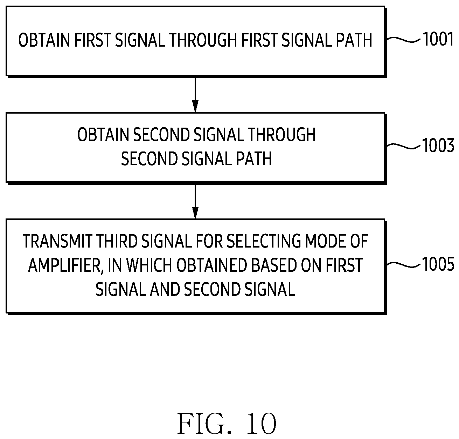

FIG. 10 is a flowchart illustrating an operation of an electronic device, according to an embodiment. The electronic device of FIG. 10 may include the electronic device of FIGS. 1 to 9. The RFFE of FIG. 10 may include the RFFE 230 of FIGS. 2 to 9.

Referring to FIG. 10, in operation 1001, according to an embodiment, a comparator (e.g., the comparator 300 in FIG. 3) may obtain a first signal through a first signal path (e.g., the signal path 360 in FIG. 3). According to an embodiment, the comparator may be obtained through a first coupler (e.g., the coupler 340 in FIG. 3) disposed on the first signal path and may obtain a first signal adjusted by an attenuator (e.g., the attenuator 330 in FIG. 3). According to one embodiment, the comparator may receive a first voltage obtained by rectifying the first signal through a rectifier (e.g., the rectifier 311 in FIG. 3).

According to an embodiment, in operation 1003, the comparator may obtain a second signal through a second signal path (e.g., the signal path 380 of FIG. 3). The comparator may obtain the first signal transmitted to the first signal path and a second signal generated based on the first signal and transmitted in the second signal path. According to an embodiment, the comparator may receive a second voltage obtained by rectifying a second signal through a rectifier (e.g., the rectifier 321 in FIG. 3).

According to an embodiment, in operation 1005, the comparator may transmit the third signal, in which obtained based on the first signal and the second signal, and for selecting a mode of the amplifier (e.g., the amplifier 235 in FIG 3), to the amplifier. For example, a comparator may transmit a third signal for adjusting a gain between the first signal path and the second signal path based on the first signal and the second signal. For example, the gain between the first signal path and the second signal path may be adjusted by the mode of the amplifier. The mode of the amplifier may include a first designated mode (e.g., the high-power mode) for adjusting within the designated range, and a second designated mode (e.g., the low-power mode, the bypass mode) for adjusting to be less than the designated range.

According to an embodiment, the comparator may transmit a third signal for selecting a mode of the amplifier to the amplifier based on the first voltage that rectified the first signal and the second voltage that rectified the second signal. For example, the comparator may transmit a signal for adjusting a gain between the first signal path and the second signal path to be less than the designed range, based on the amplitude of the first voltage being identified as the second voltage or more.

According to an embodiment, the comparator may transmit a signal for selecting one of the low-power mode or the bypass mode related to the gain of the amplifier in response to identifying a signal from the duplexer (e.g., the duplexer 236 of FIG. 3) to the amplifier. For example, the comparator may identify a signal from the duplexer to the amplifier based on the second signal being identified as less than the first signal.

As described above, the electronic device may prevent damage (or burnout) to the amplifier by selecting a mode of the amplifier as one of the low-power mode or the bypass mode based on identifying a signal from the duplexer to the amplifier. The electronic device may prevent damage (or burnout) to the amplifier by selecting a mode related to a gain of the amplifier based on the signal output from the comparator by the first signal and the second signal.

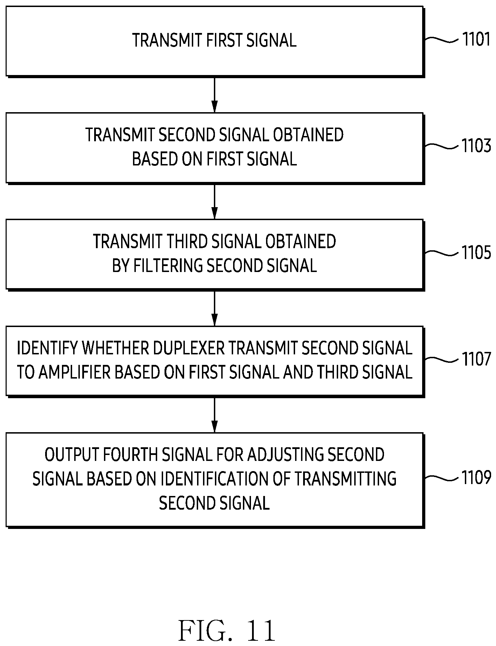

FIG. 11 is a flowchart illustrating an operation of an electronic device, according to an embodiment. The electronic device of FIG. 11 may include the electronic device of FIGS. 1 to 10. The RFFE of FIG. 11 may include the RFFE of FIGS. 1 to 10.

Referring to FIG. 11, in operation 1101, according to an embodiment, the RFIC (e.g., the RFIC 220 of FIG. 2) may transmit a first signal (e.g., a wireless signal for radiating to the outside). For example, the RFIC may transmit a radio AC signal for radiating to the outside through the first signal path (e.g., the amplifier 235 in FIG. 3) to the amplifier (e.g., the amplifier 235 in FIG. 3).

In operation 1103, according to an embodiment, the amplifier may transmit the second signal obtained based on the first signal. For example, the amplifier may transmit the amplified second signal to the duplexer (e.g., the duplexer 236 in FIG. 2) based on the reception of the first signal. The duplexer may transmit at least a part of the amplified second signal to the amplifier.

In operation 1105, according to an embodiment, the duplexer may transmit a third signal obtained by filtering the second signal transmitted from the amplifier to the antenna (e.g., the antenna 240 of FIG. 2). For example, the duplexer may propagate the third signal to the antenna in order to radiate the third signal obtained by filtering the second signal while transmitting at least a portion of the second signal to the amplifier, to the outside of the electronic device.

In operation 1107, according to an embodiment, a comparator (e.g., the comparator 300 of FIG. 3) may identify whether the duplexer transmits at least a part of the second signal to the amplifier based on the first signal and the third signal. For example, the comparator may compare the amplitude of the first signal obtained from a first coupler (e.g., a coupler 340 of FIG. 3) disposed on a first signal path to which a first signal is transmitted (e.g., a signal path 360 of FIG. 3) and the amplitude of the third signal obtained from the second coupler (e.g., the coupler 350 of FIG. 3 ) disposed on the second signal path (e.g., the signal path 380 of FIG. 3 ) through which the third signal is transmitted. The comparator may identify that at least a part of the second signal is transmitted from the duplexer to the amplifier based on the amplitude of the third signal being identified as less than or equal to the amplitude of the first signal. For example, the first coupler may include an actuator (e.g., the actuator 330 of FIG. 3) for adjusting the amplitude of the first signal in the first signal path. For example, the actuator may obtain a first signal through the first coupler, adjust the amplitude of the first signal, and transmit it to the comparator.

In operation 1109, according to an embodiment, the comparator may output a fourth signal for adjusting at least a part of the second signal transmitted from the duplexer to the amplifier based on identifying that the duplexer transmits at least a part of the second signal to the amplifier. The fourth signal may include a signal for adjusting a gain between the first signal and the second signal.

According to an embodiment, the comparator may include a first rectifying circuit (e.g., the rectifier 321 in FIG. 3) capable of rectifying the first signal. The comparator may include a second rectifying circuit (e.g., the rectifier 311 of FIG. 3) capable of rectifying the third signal. The comparator may obtain a first voltage indicating the amplitude of the first signal and a second voltage indicating the amplitude of the third signal. The comparator may transmit a fifth signal for selecting a first designated mode (e.g., the high-power mode) for adjusting a gain between the first signal and the second signal within the designated range based on obtaining of a second voltage exceeding the first voltage.

According to an embodiment, the comparator may transmit a sixth signal for selecting a second designated mode (e.g., the low-power mode or the bypass mode) for adjusting a gain between the first signal and the second signal to be less than the designated range, based on obtaining a second voltage that is less than or equal to the first voltage. For example, the fourth signal may include the fifth signal for selecting the first designated mode and/or a sixth signal for selecting the second designated mode.

As described above, the electronic device may prevent damage (or burnout) to the amplifier by transmitting the fourth signal for adjusting at least a part of the second signal based on the identification of at least a part of the second signal transmitted from the duplexer to the amplifier.

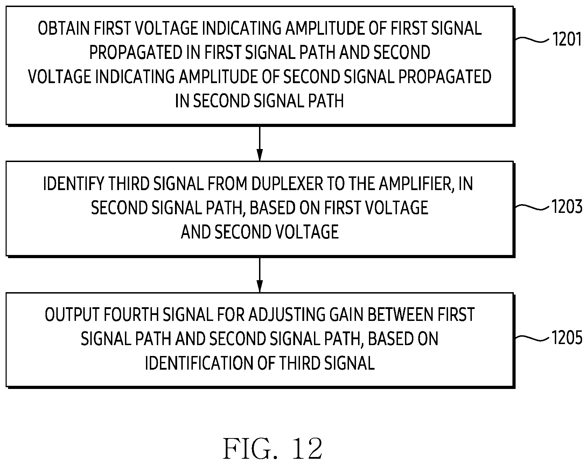

FIG. 12 is a flowchart illustrating an operation of an electronic device, according to an embodiment. The electronic device of FIG. 12 may include the electronic device of FIGS. 1 to 11. The RFFE of FIG. 12 may include the RFFE of FIGS. 1 to 11.

Referring to FIG. 12, in operation 1201, according to an embodiment, the electronic device may obtain a first voltage indicating the amplitude of the first signal propagated in the first signal path (e.g., the signal path 360 of FIG. 3) and a second voltage indicating the amplitude of the second signal propagated in the second signal path (e.g., the signal path 370 of FIG. 3 and a signal path 380 of FIG. 3). For example, the first voltage may be obtained by a first rectifier (e.g., the rectifier 321 of FIG. 3) connected to the first signal path. The first rectifier may obtain the first voltage indicating an amplitude of the first signal by rectifying the first signal and transmit the obtained voltage to a comparator. For example, the second voltage may be obtained by a second rectifier (e.g., the rectifier 311 of FIG. 3) connected to the second signal path. The second rectifier may obtain the second voltage indicating an amplitude of the second signal by rectifying the second signal, and transmit the second voltage to a comparator (e.g., the comparator 300 of FIG. 3).

In operation 1203, according to an embodiment, the electronic device may identify a third signal from the duplexer (e.g., the duplexer 236 in FIG. 3) to the amplifier (e.g., the amplifier 235 in FIG. 3) in the second signal path based on the first voltage and the second voltage. For example, the electronic device may identify the third signal from the duplexer to the amplifier within the second signal path based on the first voltage being identified above the second voltage. For example, the third signal may include a signal transmitted from an amplifier and reflected by the duplexer.

In operation 1205, according to an embodiment, the electronic device may output the fourth signal for adjusting a gain between the first signal path and the second signal path based on identification of the third signal. For example, the electronic device may transmit the fourth signal for adjusting a gain between the first signal path and the second signal path within a designated range to the amplifier, based on identifying the signal reflected from the duplexer. For example, the designated range may include a range in which the gain between the first signal path and the second signal path is amplified by 0 dB to 20 dB by the amplifier.

As described above, the electronic device may prevent damage (or burnout) to the amplifier by adjusting a gain between the first signal path and the second signal path to the designated range by transmitting a fourth signal for adjusting a gain between the first signal path and the second signal path to the amplifier, based on the identification of the third signal from the duplexer to the amplifier.

The signal transmitted from the amplifier may be reflected by components (e.g., a duplexer) included in the electronic device, causing damage (or burnout) to the amplifier. The electronic device may require a method for identifying the reflected signal and preventing damage (or burnout) to the amplifier.

As described above, according to an embodiment, an electronic device (e.g., the electronic device 101 of FIG. 1) may comprise a RFIC(radio frequency integrated circuit) (e.g., the RFIC 220 in FIG. 2), an amplifier (e.g., amplifier 235 in FIG. 2coupled to the RFIC via a first signal path(e.g., the signal path 360 in FIG. 3), an antenna (e.g., antenna 240 of FIG. 2) coupled to a second path (e.g., the signal path 380 of FIG. 3) different from the first signal path, a comparator (e.g., the comparator 300 in FIG. 3 and/or the comparator 232 in FIG. 2) coupled to the first signal path and the second signal path, and a controller (e.g., a controller 231) for adjusting a gain between the first signal path and the second signal path based on the comparator, while a first signal is transmitted to the amplifier via the first signal path. The comparator may be configured to obtain the first signal transmitted to the first signal path, and a second signal generated based on the first signal and transmitted in the second signal path. The comparator may be configured to transmit, based on the first signal and the second signal, a third signal for selecting a mode, which is associated with the gain, among a first designated mode for adjusting the gain within a designated range, or a second designated mode for adjusting the gain to be less than the designated range.

A signal transmitted from an amplifier may be reflected by components (e.g., a duplexer) included in an electronic device, causing damage (or burnout) to the amplifier. The electronic device can identify the reflected signal, and prevent damage (or burnout) to the amplifier.

According to an embodiment, the electronic device may further comprise a gate (e.g., the gate 410 of FIG. 4) connected the comparator and the amplifier. The gate may be configured to transmit the third signal to the amplifier based on receiving a fourth signal from the controller indicating that the first signal is transmitted to the first signal path.

According to an embodiment, the electronic device may further comprise a communication processor (e.g., the communication processor 210 of FIG. 2). The communication processor may be configured to transmit a fifth signal for notifying transmission of the first signal by RFIC to the controller. The controller may be configured to transmit the fourth signal to the gate based on identifying the fifth signal.

According to an embodiment, the electronic device may further comprise a duplexer (e.g., the duplexer 236 of FIG. 2) connected the amplifier, the RFIC, and the antenna. The comparator may be configured to transmit the third signal for selecting the second designated mode among the first designated mode or the second designated mode, in response to identifying a sixth signal from the duplexer to the amplifier, based on the first signal and the second signal.

According to an embodiment, the electronic device may further comprise a first coupler (e.g., the coupler 350 of FIG. 3) disposed between the duplexer and the antenna in the second signal path. The comparator may be configured to obtain the second signal of the second signal path using the first coupler.

According to an embodiment, the electronic device of claim 1 may further comprise a second coupler (e.g., the coupler 360 of FIG. 3) disposed on the first signal path, and an attenuator (e.g., the attenuator 330 of FIG. 3) for adjusting an amplitude of the first signal of the first signal path obtained by the second coupler. The attenuator may be configured to transmit the first signal having the adjusted amplitude to the comparator.

According to an embodiment, the electronic device may further comprise a switch (e.g., the switch 530 of FIG. 5). The switch may be configured to transmit the first signal transmitted from the RFIC via the first signal path to the antenna via the second signal path independently of the amplifier, based on the reception of the third signal for selecting the mode in the first designated mode from comparator.

According to an embodiment, the comparator may comprise a first rectifying circuit (e.g., the rectifier 311 of FIG. 3) for obtaining a first voltage indicating the amplitude of the first signal by rectifying the first signal of the first signal path, a second rectifying circuit (e.g., the rectifier 321 of FIG. 3) for obtaining a second voltage indicating the amplitude of the second signal by rectifying the second signal of the second signal path.

According to an embodiment, the comparator may be configured to transmit the third signal for selecting the amplifier in the first designated mode based on obtaining the second voltage exceeding the first voltage.

According to an embodiment, the comparator may be configured to transmit the third signal for selecting the amplifier in the second designated mode based on obtaining the second voltage equal to or less than the first voltage.

As described above, according to an embodiment, a method of electronic device (e.g., the electronic device 101 of FIG. 1) may comprise transmitting a first signal via a first signal path between a RFIC(radio frequency integrated circuit) (e.g., the RFIC 220 of FIG. 2) and an amplifier (e.g., the amplifier 235 in FIG. 2) by using the RFIC of the electronic device. The method of electronic device may comprise obtaining the first signal transmitted to the first signal path (e.g., the signal path 360 in FIG. 3), and a second signal generated based on the first signal and transmitted in the second signal path based on a comparator (e.g., the comparator 300 of FIG. 3 and/or the comparator 232 of FIG. 2) coupled to the first signal path and the second signal path (e.g., the signal path 380 of FIG. 3) different from the first signal path, while the first signal is transmitted the RFIC to the amplifier. The method of electronic device may comprise transmitting, based on the first signal and the second signal, a third signal for selecting a mode, which is associated with a gain between the first signal path and the second signal path, among a first designated mode for adjusting the gain within a designated range, or a second designated mode for adjusting the gain to be less than the designated range.

According to an embodiment, the transmitting the third signal may comprise transmitting the third signal to the amplifier based on a fourth signal indicating that the first signal is transmitted to the first signal path via a gate connected the comparator and the amplifier.

According to an embodiment, the transmitting the third signal may comprise transmitting the third signal for selecting the mode, which is associated with the gain, to the second designated mode among the first designated mode or the second designated mode, in response to identifying a fifth signal from a duplexer (e.g., duplexer 236 of FIG. 2) disposed on the second signal path to the amplifier, based on the first signal and the second signal.

According to an embodiment, the transmitting the first signal may comprise transmitting the first signal transmitted from the RFIC (e.g., RFIC 220 of FIG. 2) via the first signal path to an antenna via a switch (e.g., the switch 530 of FIG. 5) connecting the first signal path and a second signal path (e.g., the signal path 370 of FIG. 3) different from the first signal path, based on the transmission of the third signal for selecting the mode in the second mode from comparator to amplifier.

According to an embodiment, the transmitting the third signal may further comprise obtaining a first voltage indicating the amplitude of the first signal by rectifying the first signal of the first signal path via a first rectifying circuit (e.g., the rectifier 311 of FIG. 3). The transmitting the third signal may further comprise obtaining a second voltage indicating the amplitude of the second signal by rectifying the second signal of the second signal path via a second rectifying circuit (e.g., the rectifier 321 of FIG. 3).

According to an embodiment, the transmitting the third signal may comprise transmitting the third signal for selecting the amplifier in the first designated mode based on obtaining the second voltage exceeding the first voltage.

As described above, according to an embodiment, an electronic device (e.g., the electronic device 101 of FIG. 1) may comprise an RFIC(radio frequency integrated circuit), an amplifier (e.g., the amplifier 235 in FIG. 2) for amplifying a first signal transmitted from the RFIC (e.g., the RFIC 220 in FIG. 2), a duplexer (e.g., the duplexer 236 of FIG. 2) receiving a second signal amplified by the amplifier, an antenna (e.g., the antenna 240 of FIG. 2) transmitting wirelessly the third signal filtered by the duplexer, a comparator r (e.g., the comparator 300 in FIG. 3 and/or the comparator 232 in FIG. 2) for obtaining the first signal and the third signal. The comparator may be configured to identify whether the duplexer transmits at least a portion of the second signal towards the amplifier, based on the first signal and the third signal. The comparator may be configured to output a fourth signal for adjusting the at least a portion of the second signal transmitted from the duplexer to the amplifier based on identifying that the duplexer transmits the at least a portion of the second signal to the amplifier.

According to an embodiment, the electronic device may further comprise a first coupler (e.g., the coupler 340 of FIG. 3) disposed in a first signal path h (e.g., the signal path 360 of FIG. 3) which is transmitted the first signal and connected to the comparator, a second coupler (e.g., the coupler 350 of FIG. 3) disposed in a second signal path (e.g., the signal path 380 of FIG. 3) which is transmitted the third signal and connected to the comparator. The comparator may be configured to output the fourth signal based on the first signal obtained by the first coupler and the third signal obtained by the second coupler.

According to an embodiment, the electronic device may include an actuator (e.g., the actuator 330 in FIG. 3) for adjusting the amplitude of the first signal, in a signal path through which the first signal obtained through the first coupler is transmitted. The actuator may transmit the first signal having the adjusted amplitude to the comparator.

According to an embodiment, the comparator may include a first rectifying circuit (e.g., the rectifier 311 of FIG. 3) for rectifying the first signal to obtain a first voltage indicating the amplitude of the first signal, and a second rectifying circuit (e.g., the rectifier 321 of FIG. 3) for rectifying the third signal to obtain a second voltage indicating the amplitude of the third signal.

According to an embodiment, the comparator may transmit a fifth signal for selecting in the first designated mode for adjusting a gain between the first signal and the second signal within a designated range based on obtaining the second voltage exceeding the first voltage.

According to an embodiment, the comparator may transmit a sixth signal for selecting in the second designated mode for adjusting a gain between the first signal and the second signal to be less than the designated range based on obtaining the second voltage below the first voltage.

As described above, according to an embodiment, an electronic device (e.g., the electronic device 101 of FIG. 1) may comprise an amplifier (e.g., the amplifier 235 in FIG. 2) connected to the RFIC through a radio frequency integrated circuit (e.g., the RFIC 220 in FIG. 2) and a first signal path (e.g., the signal path 360 in FIG. 3), a duplexer (e.g., the duplexer 236 in FIG. 2) disposed on a second signal path (e.g., the signal path 370 in FIG. 3 and the signal path 380 in FIG. 3) between the amplifier and the antenna (e.g., the antenna 240 in FIG. 2), and a comparator (e.g., the comparator 300 in FIG. 3 and/or the comparator 232 in FIG. 2) connected to the first signal path and the second signal path. The comparator may obtain a first voltage indicating an amplitude of a first signal propagated in the first signal path and a second voltage indicating an amplitude of a second signal propagated in the second signal path. The comparator may identify a third signal from the duplexer to the amplifier in the second signal path based on the first voltage and the second voltage. The comparator may output a fourth signal for adjusting a gain between the first signal path and the second signal path within a designated range based on identification of the third signal from the duplexer to the amplifier.

As described above, according to an embodiment, the method of an electronic device (e.g., the electronic device 101 in FIG. 1) may include transmitting a first signal from a radio frequency integrated circuit (e.g., the RFIC 220 in FIG. 2) to an amplifier (e.g., the amplifier 235 in FIG. 2). The method of the electronic device may include transmitting the second signal amplified by the amplifier to a duplexer (e.g., the duplexer 236 in FIG. 2). The method of the electronic device may include obtaining the first signal and the third signal filtered by the duplexer. The method of the electronic device may include identifying whether the duplexer transmits at least a part of the second signal to the amplifier based on the first signal and the third signal. The method of the electronic device may include outputting a fourth signal for adjusting at least a part of the second signal transmitted from the duplexer to the amplifier based on identification of the second signal transmission to the amplifier.

According to an embodiment, the operation of outputting the fourth signal may include an operation of outputting the fourth signal based on the first signal obtained by a first coupler (e.g., the coupler 340 of FIG. 3) disposed on a first signal path (e.g., the signal path 360 in FIG. 3) to which the first signal is transmitted and connected to a comparator (e.g., the comparator 300 of FIG. 3 and/or the comparator 232 of FIG. 2), and the third signal obtained by a second coupler (e.g., the coupler 350 in FIG. 3) disposed on a second signal path to (e.g., the signal path 380 in FIG. 3) which the third signal is transmitted and connected to the above comparator.

According to an embodiment, the operation of identifying whether at least a part of the second signal is transmitted may include an operation of adjusting an amplitude of the first signal in a propagation path of the first signal obtained through the first coupler. The operation of identifying whether at least a part of the second signal is transmitted may further include an operation of transmitting the first signal having the adjusted amplitude.

According to an embodiment, the operation of identifying whether at least a part of the second signal is transmitted may include an operation of obtaining a first voltage indicating the amplitude of the first signal by rectifying the first signal through a first rectifying circuit (e.g., the rectifier 311 of FIG. 3). The operation of identifying whether at least a part of the second signal is transmitted may further include an operation of obtaining a second voltage indicating the amplitude of the third signal by rectifying the third signal through a second rectifying circuit (e.g., the rectifier 321 of FIG. 3).

According to an embodiment, the operation of outputting the fourth signal may further include an operation of transmitting a fifth signal for selecting a first designated mode for adjusting a gain between the first signal and the second signal within a designated range, based on obtaining the second voltage exceeding the first voltage.

According to an embodiment, the operation of outputting the fourth signal may further include an operation of transmitting a sixth signal for selecting a second designated mode for adjusting a gain between the first signal and the second signal to be less than a designated range, based on obtaining the second voltage that is less than or equal to the first voltage.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wired), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a RFIC(radio frequency integrated circuit);
an amplifier coupled to the RFIC via a first signal path;
an antenna coupled to a second path different from the first signal path;
a comparator coupled to the first signal path and the second signal path; and
a controller for adjusting a gain between the first signal path and the second signal path based on the comparator, while a first signal is transmitted to the amplifier via the first signal path, and
wherein the comparator is configured to:
obtain the first signal transmitted to the first signal path, and a second signal generated based on the first signal and transmitted in the second signal path; and
transmit, based on the first signal and the second signal, a third signal for selecting a mode, which is associated with the gain, among a first designated mode for adjusting the gain within a designated range, or a second designated mode for adjusting the gain to be less than the designated range.

2. The electronic device of claim 1, further comprises:
a gate connected the comparator and the amplifier, and
wherein the gate is configured to transmit the third signal to the amplifier based on receiving a fourth signal from the controller indicating that the first signal is transmitted to the first signal path.

3. The electronic device of claim 2, further comprises:
a communication processor,
wherein the communication processor is configured to transmit a fifth signal for notifying transmission of the first signal by RFIC to the controller, and
wherein the controller is configured to transmit the fourth signal to the gate based on identifying the fifth signal.

4. The electronic device of claim 1, further comprises:
a duplexer connected the amplifier, the RFIC, and the antenna, and
wherein the comparator is configured to transmit the third signal for selecting the second designated mode among the first designated mode or the second designated mode, in response to identifying a sixth signal from the duplexer to the amplifier, based on the first signal and the second signal.

5. The electronic device of claim 4, further comprises:
a first coupler disposed between the duplexer and the antenna in the second signal path, and
wherein the comparator is configured to obtain the second signal of the second signal path using the first coupler.

6. The electronic device of claim 1, further comprises:
a second coupler disposed on the first signal path, and
an attenuator for adjusting an amplitude of the first signal of the first signal path obtained by the second coupler, and
wherein, the attenuator is configured to transmit the first signal having the adjusted amplitude to the comparator.

7. The electronic device of claim 1, further comprises:
a switch, and
wherein the switch is configured to transmit the first signal transmitted from the RFIC via the first signal path to the antenna via the second signal path independently of the amplifier, based on the reception of the third signal for selecting the mode in the first designated mode from comparator.

8. The electronic device of claim 1,
wherein the comparator comprises:
a first rectifying circuit for obtaining a first voltage indicating the amplitude of the first signal by rectifying the first signal of the first signal path; and
a second rectifying circuit for obtaining a second voltage indicating the amplitude of the second signal by rectifying the second signal of the second signal path.

9. The electronic device of claim 8, the comparator is configured to transmit the third signal for selecting the amplifier in the first designated mode based on obtaining the second voltage exceeding the first voltage.

10. The electronic device of claim 1, the comparator is configured to transmit the third signal for selecting the amplifier in the second designated mode based on obtaining the second voltage equal to or less than the first voltage.

11. A method of electronic device comprising:
transmitting a first signal via a first signal path between a RFIC(radio frequency integrated circuit) and an amplifier by using the RFIC of the electronic device;
obtaining the first signal transmitted to the first signal path, and a second signal generated based on the first signal and transmitted in the second signal path based on a comparator coupled to the first signal path and the second signal path different from the first signal path, while the first signal is transmitted the RFIC to the amplifier;
transmitting, based on the first signal and the second signal, a third signal for selecting a mode, which is associated with a gain between the first signal path and the second signal path, among a first designated mode for adjusting the gain within a designated range, or a second designated mode for adjusting the gain to be less than the designated range.

12. The method of claim 11, wherein the transmitting the third signal comprises:
transmitting the third signal to the amplifier based on a fourth signal indicating that the first signal is transmitted to the first signal path via a gate connected the comparator and the amplifier.

13. The method of claim 11, wherein the transmitting the third signal comprises:
transmitting the third signal for selecting the mode, which is associated with the gain, to the second designated mode among the first designated mode or the second designated mode, in response to identifying a fifth signal from a duplexer disposed on the second signal path to the amplifier, based on the first signal and the second signal.

14. The method of claim 11, wherein the transmitting the first signal comprises:
transmitting the first signal transmitted from the RFIC via the first signal path to an antenna via a switch connecting the first signal path and a second signal path different from the first signal path, based on the transmission of the third signal for selecting the mode in the second mode from comparator to amplifier.

15. The method of claim 11, wherein the transmitting the third signal further comprises:
obtaining a first voltage indicating the amplitude of the first signal by rectifying the first signal of the first signal path via a first rectifying circuit; and
obtaining a second voltage indicating the amplitude of the second signal by rectifying the second signal of the second signal path via a second rectifying circuit.
